# FASCICULE DE BREVET EUROPEEN

(11) **EP 0 561 009 B1**
(45) Date de publication et mention de la délivrance du brevet: **12.06.1996**
(21) Numéro de dépôt: 92104455.8
(22) Date de dépôt: 16.03.1992
(51) Int. Cl.: A23F 5/48

(54) **Procédé de traitement d'huile de café destinée à être mise en contact avec un givre chargé en arômes de café**
Verfahren zur Behandlung von Kaffee-Öl, bestimmt um mit einem Kaffeearoma enthaltenden Gefrierkondensat aufgenommen zu werden
Process for treating coffee oil intended to be brought into contact with a coffee flavour containing frost

(43) Date de publication de la demande: 22.09.1993
(73) Titulaire: SOCIETE DES PRODUITS NESTLE S.A., CH-1800 Vevey (CH)
(72) Inventeur: Koch, Peter, CH-1350 Orbe (CH); Parchet, Jean-Michel, CH-1350 Orbe (CH)

(56) Documents cités:
- EP-A- 0 041 370
- FR-A- 2 400 849
- GB-A- 1 206 296
- US-A- 3 535 118
- M. SIVETZ 'Coffee Proceesing Technoligie' 1963 , AVI PUBLISHING CO , WESTPORT, CONNECTICUT ,USA

## Description

La présente invention est relative à un procédé de traitement d'huile de café destinée à être mise en contact avec un givre chargé en arômes de café.

La fabrication de poudre de café soluble, par atomisation ou lyophilisation d'un extrait de café obtenu par percolation d'un liquide d'extraction à travers des cellules remplies de café torréfié moulu, est connue pour engendrer un produit final qui ne présente pas l'arôme d'un café rôti.

Différentes solutions ont été proposées dans lesquelles une huile, généralement une huile de café, est enrichie en arômes de café puis pulvérisée sur la poudre de café soluble. La principale source d'arômes utilisée est constituée par les arômes dégagés par le café rôti moulu.

FR-A-2400849 décrit un procédé de séparation et de récupération des constituants aromatiques du café torréfié, dans lequel on mélange une huile de café désaromatisée avec a café rôti moulu, on exprime une huile aromatisée du mélange, et l'on filtre l'huile aromatisée exprimée sur un filtre-presse à une température préférée comprise entre 25 et 45°C.

Coffee Processing Technology **2**, 178-181 (1963) décrit en particulier une "winterisation", autrement dit un maintien au repos à 4°C durant 3-6 jours, d'une huile de café extraite au solvant et dont le solvant a été éliminé, pour faire cristalliser des acides gras et des insolubles qui sont ensuite écartés par centrifugation ou filtration.

GB-A-1206296 décrit notamment un procédé de production d'un extrait de café soluble en poudre, dans lequel on prélève les arômes d'un café rôti moulu par entraînement à la vapeur, on récupère un condensat de vapeurs aromatisées, on forme une émulsion de ce condensat avec une huile exprimée d'une petite quantité de café rôti moulu et clarifiée par filtration, et l'on aromatise un extrait aqueux du café désaromatisé, avant ou après son séchage, en y ajoutant l'huile aromatisée séparée de l'émulsion par décantation ou centrifugation.

JP-A-1231879 (résumé WPI/Derwent AN=89-313503) décrit la séparation d'une huile de café contenue dans extrait aqueux de café rôti moulu, par centrifugation à 10-40°C, et sa filtration, après un refroidissement à 0-10°C, avec un filtre de coton, de papier, de cellulose ou de résine ayant une porosité de 1-25 microns.

Il est également connu de faire circuler un gaz inerte, tel que le dioxyde de carbone, à travers un café rôti moulu. Ce gaz inerte se charge en arômes et un givre est formé par la condensation du dioxyde de carbone, de l'humidité entraînée et des arômes. Ce givre est ensuite mis en contact avec une huile qui récupère ainsi une partie des arômes contenus dans le givre. Cette mise en contact peut être réalisée en mettant directement en contact l'huile et le givre constitué de dioxyde de carbone, d'eau et d'arômes. Un autre mode de mise en contact consiste à sublimer le dioxyde de carbone et à mettre en contact la phase aqueuse résiduelle chargée en arômes avec l'huile. L'huile obtenue, enrichie en arômes, peut ensuite être réincorporée à une poudre de café soluble.

L'huile de café peut être une huile obtenue par pressage de café torréfié n'ayant pas subi d'extraction ou, plus souvent, à partir du marc résultant du procédé d'extraction à l'eau du café rôti moulu.

En effet, l'huile obtenue à partir du café torréfié non extrait génère des sous produits tels que le gâteau de pressage qui sont difficilement valorisables. De plus, le pressage de café torréfié non extrait entraîne des pertes d'arômes qui s'échappent lors du pressage ou sont détruits par les températures atteintes lors de ce pressage.

La mise en contact de l'huile avec soit le givre chargé en arômes soit la phase aqueuse résiduelle produit une émulsion d'huile et d'eau. Il n'est pourtant pas souhaitable de pulvériser une émulsion d'huile et d'eau sur une poudre de café et ceci pour plusieurs raisons. En premier lieu, l'émulsion n'ayant pas toujours les mêmes caractéristiques, le procédé ne présente pas la constance et la reproductibilité nécessaires à un processus industriel. En deuxième lieu, la présence d'eau peut être néfaste à la stabilité des arômes. C'est pourquoi il convient de pouvoir séparer l'huile de l'eau quelle contient. Or, il est apparu que, dans certains cas, l'émulsion produite était trop stable pour pouvoir facilement séparer l'huile de l'eau. Dans la suite de la description on parlera de mise en contact de l'huile et du givre, que ce contact soit direct ou que l'huile soit mise en contact avec la phase aqueuse résiduelle obtenue après sublimation du dioxyde de carbone.

La présente invention a ainsi pour but de proposer un procédé de traitement de l'huile de café préalablement à sa mise en contact avec le givre chargé en arômes qui permette d'obtenir une émulsion d'huile et d'eau facilement décantable.

Or il a été trouvé que l'obtention d'une émulsion stable était due à la présence dans l'huile de café de certains composants qu'il n'a pas été possible d'identifier. Il a été plus particulièrement trouvé qu'il suffisait de filtrer l'huile de café pour ôter ces composants responsables de la stabilité de l'émulsion et donc pour obtenir une huile qui une fois mise en contact avec un givre produisait une émulsion facilement décantable.

La présente invention a ainsi pour objet un procédé de traitement d'une huile de café, dans lequel on filtre l'huile à une température comprise entre 15°C et moins de 30°C, l'huile passant à travers une surface de filtration sur laquelle elle forme une précouche suffisante pour permettre l'obtention d'une huile limpide, on met en contact ladite huile limpide avec soit un givre constitué de dioxyde de carbone, d'eau et d'arômes de café, soit avec la phase aqueuse résiduelle chargée en arômes obtenue après la sublimation du dioxyde de carbone présent dans le givre, pour obtenir une émulsion d'huile et d'eau, et l'on sépare l'huile de l'eau de ladite émulsion par décantation.

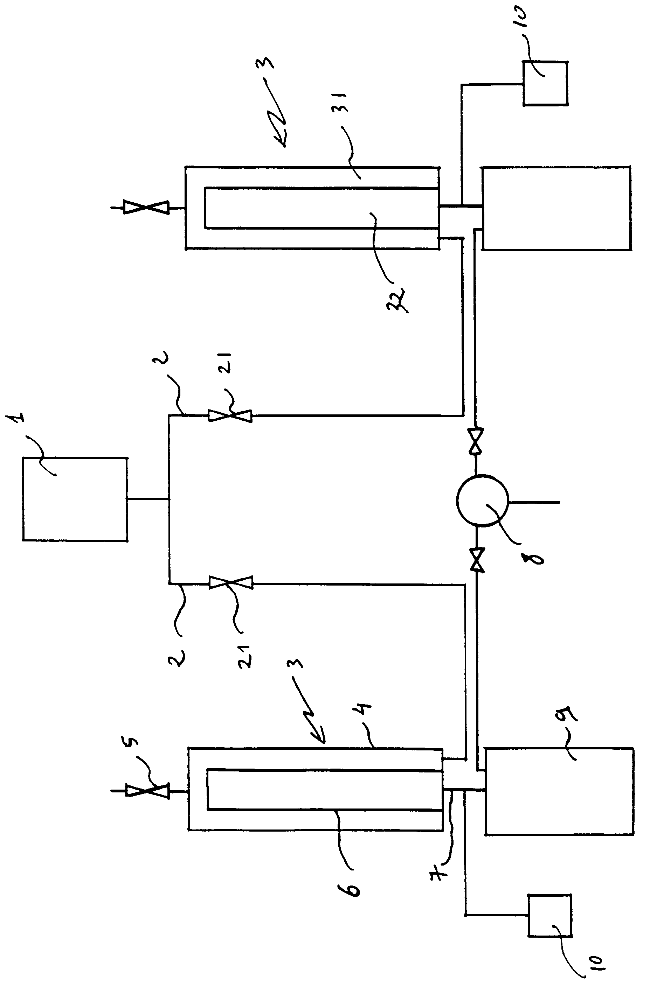

D'autres caractéristiques et avantages ressortiront à la suite de la description qui va suivre faite en référence à la figure annexée unique qui représente un schéma d'un dispositif de filtration de l'huile pour la mise en oeuvre du procédé selon l'invention.

Comme illustré à la figure unique, le dispositif pour la mise en oeuvre du procédé selon l'invention peut être constitué d'un réservoir d'alimentation 1 dans lequel est placée l'huile à traiter. Ce réservoir est maintenu à une température fixée par un dispositif non représenté par exemple constitué d'un serpentin immergé dans le bain d'huile maintenu en mouvement par un agitateur non représenté. Ainsi, la température de l'huile est maintenue de préférence entre 18°C et 25°C. En effet, en dessous de 15°C, l'huile devient trop visqueuse pour pouvoir être filtrée.

Ce réservoir d'alimentation 1 est en relation, par une conduite d'alimentation 2 munie d'une vanne 21 avec un, ou plusieurs, filtre 3 constitué d'une enveloppe externe 4 amovible munie d'un évent 5, d'une surface de filtration 6 cylindrique et d'une conduite de sortie 7 de l'huile filtrée reliée à un réservoir de stockage de l'huile filtrée 9 lui même relié à un dispositif 8 de mise sous vide partiel. Ainsi, chaque filtre 3 est constitué de deux espaces concentriques séparés par la surface de filtration 6, l'espace externe 31, limité par l'enveloppe externe 4 et la surface de filtration 6, étant relié au réservoir d'alimentation 1, l'espace interne 32 étant relié au dispositif 8 de mise sous vide partiel et au réservoir de stockage 9. Préférablement, l'installation comprend deux filtres 3 destinés à fonctionner en alternance.

Le remplissage des filtres 3 se fait par simple gravité en ouvrant la vanne d'alimentation 21 et l'évent 5 de l'enveloppe externe 4 jusqu'à ce que l'huile atteigne le niveau de l'évent 5 en remplissant l'espace externe 31. Après fermeture de la vanne 21 et de l'évent 5, l'espace interne 32 situé de l'autre coté de la surface de filtration 6 est mis sous vide partiel par le dispositif 8. Durant la filtration, l'huile passe à travers la surface de filtration 6, de l'extérieur vers l'intérieur, en s'écoulant dans le réservoir de stockage 9.

Préférablement, la tête de filtration, de volume variable, est dirigée dans le réservoir d'alimentation 1 jusqu'à ce que l'huile obtenue soit limpide. Par tête de filtration on entend le volume d'huile qui s'écoule au départ du processus de filtration. On entend par huile limpide une huile qui ne présente pas de turbidité à l'examen par transparence dans un tube à essai placé devant une source lumineuse.

Une fois la filtration terminée, la pression atmosphérique est rétablie dans le système.

Préférablement, à cause de pertes de charges importantes suite à la formation d'une précouche de dépôt sur la surface de filtration 6, la filtration est limitée à une certaine durée fonction de l'installation utilisée. Une fois cette durée de filtration atteinte, l'opération est stoppée et l'huile non filtrée encore présente dans l'espace externe 31 est dirigée vers le réservoir d'alimentation 1.

L'enveloppe externe amovible 4 peut être ôtée et le dépôt accumulé sur la surface de filtration 6 peut ainsi être raclé par un moyen approprié. A la suite de cela, de la vapeur sous pression est injectée dans le sens inverse de la filtration par la sortie 7, à partir d'une source de vapeur 10, dans l'espace interne 32, soit de l'intérieur vers l'extérieur. Le dépôt non récupéré par le raclage est rapidement liquéfié et éliminé. Le dispositif est ensuite séché et refroidi par passage d'air sous pression. La durée totale de cette phase de nettoyage du filtre est un paramètre important à prendre en compte lors de la fixation de la durée de la phase de filtration dont il a été fait mention ci-avant. Plus particulièrement, pour pouvoir fonctionner en continu avec deux filtres fonctionnant en alternance, il est préférable que la durée de filtration soit au moins égale à la durée du nettoyage. En effet, pendant le nettoyage d'un filtre, le processus de filtration est poursuivi dans un autre filtre.

D'autres filtres que des filtres à bougie ont été utilisés avec autant de succés, ainsi, différents essais ont été réalisés avec des filtres presses et avec des filtres papier sous pression, avec ou sans précouche de diatomite. Ces dispositifs ont donné des résultats comparables.

### Exemple 1

Différents essais ont été réalisés pour mettre en évidence l'influence de la taille des pores de la surface de filtration sur le débit de filtration. Par ailleurs il a été utilisé des surfaces de filtration lisses et des surfaces plissées. Il a été ainsi utilisé des surfaces filtrantes constituées de bougies métalliques de 25 cm de haut et de 6 cm de diamètre commercialisées par la société PALL sous les références MCS 1001 pour les surfaces plissées (1200 cm2) et MBS 1001 (450 cm2) pour les surfaces lisses. La porosité était comprise entre 15 microns et 5 microns.

Dans tous ces essais, l'huile de départ était la même et a été filtrée pendant 2 heures à 20°C sous une pression résiduelle de 13,33 kPa (100 mm Hg).

Il apparaît clairement par ces essais que au bout d'une heure de filtration, la quantité d'huile qui passe ensuite à travers le filtre est indépendante de la porosité du filtre et indépendante de la nature de la surface de filtration (plissée ou lisse). Ceci doit être compris comme résultant de la formation d'une précouche sur la surface de filtration qui colmate les plis et fait travailler une surface plissée comme une surface lisse. De plus c'est cette précouche qui réalise en fait la filtration, la surface de filtration servant en fait de support à cette précouche. Ceci explique que la porosité de la surface de filtration n'a qu'une importance relative et que, une fois la précouche formée, la quantité d'huile qui traverse la surface de filtration est indépendante de la porosité.

En fait, la porosité de la surface de filtration ne semble intervenir que pour déterminer le temps nécessaire à la formation d'une précouche suffisante pour permettre l'obtention d'une huile limpide. Elle ne semble déterminer que le volume de la tête de filtration qui doit être recyclé dans le réservoir d'alimentation. La porosité optimale de la surface de filtration étant, en particulier, fonction de l'huile à traiter, cette porosité optimale peut être facilement déterminée par l'expérimentation.

Il semble malgré tout exister, pour les filtres à bougie du type décrit ci-dessus en tout cas, une porosité maximale limite. En effet, il a été réalisé des essais de filtration sur des installations du type décrit ci-avant mais avec des surfaces de filtration d'une porosité de 25 microns. Il a alors été nécessaire d'augmenter le volume de la tête de filtration recyclée pour obtenir une huile limpide et malgré tout, l'huile obtenue générait, après mise en contact avec le givre, une émulsion qui décantait moins bien.

### Exemple 2

Une huile de marc, obtenue par pressage, filtrée selon le procédé décrit à l'exemple 1 et une huile de marc identique mais non filtrée ont été mises en contact avec un givre chargé en arômes de café en produisant chacune une émulsion à 30 % d'eau. L'émulsion produite avec l'huile filtrée a présenté une surface stable de séparation entre l'huile et l'eau par simple décantation alors que l'émulsion réalisée avec une huile non filtrée n'a pas pu être séparée par décantation, l'émulsion étant stable.

Ceci montre bien que le procédé selon l'invention permet d'obtenir une émulsion facilement séparable.

### Exemple 3

Des essais de filtration d'huile de marc ont été réalisés sur des filtres à bougie à bougie métallique, commercialisés par la société PALL, d'une porosité de 11 microns et d'une surface de 2700 cm2. Pour hâter la formation de la précouche nécessaire à l'obtention d'une huile limpide il a été ajouté de la diatomite (commercialisée sous le nom de Celite 235) dans l'huile à filtrer.

Ces essais sont résumés dans les tableaux ci-dessous.

| Essai 1 | | | |
|---|---|---|---|
| Quantité de Celite (%) | 2 | | |

| Filtration | | | |
|---|---|---|---|
| Température (°C) | 20 | | |
| Dépression kPa (mm Hg) | 13,33 (100) | | |

| Résultats | durée (minutes) | débit d'huile filtrée | |
|---|---|---|---|
| | | (g) | (kg/m2) |
| | 30 | 1417 | 5,2 |
| | 60 | 2419 | 9,0 |
| | 90 | 3112 | 11,5 |
| | 120 | 3810 | 14,1 |
| Tête de filtration | 5 minutes 641 grammes d'huile | | |

| Essai 2 | | | |
|---|---|---|---|
| Quantité de Celite (%) | 4 | | |

| Filtration | | | |
|---|---|---|---|
| Température (°C) | 20 | | |
| Dépression kPa (mm Hg) | 13,33 (100) | | |

| Résultats | durée (minutes) | débit d'huile filtrée | |
|---|---|---|---|
| | | (g) | (kg/m2) |
| | 30 | 1886 | 7,0 |
| | 60 | 3225 | 11,9 |
| | 90 | 4283 | 15,9 |
| | 120 | 5180 | 19,2 |
| Tête de filtration | 5 minutes 1063 grammes d'huile | | |

| Essai 3 | | | |
|---|---|---|---|
| Quantité de Celite (%) | 6 | | |

| Filtration | | | |
|---|---|---|---|
| Température (°C) | 20 | | |
| Dépression kPa (mm Hg) | 13,33 (100) | | |

| Résultats | durée (minutes) | débit d'huile filtrée | |
|---|---|---|---|
| | | (g) | (kg/m2) |
| | 30 | 3320 | 12,3 |
| | 60 | 5351 | 19,8 |
| | 90 | 6858 | 25,4 |
| | 120 | 8083 | 29,9 |
| Tête de filtration | 2 minutes 1051 grammes d'huile | | |

| Essai 4 | | | |
|---|---|---|---|
| Quantité de Celite (%) | 10 | | |

| Filtration | | | |
|---|---|---|---|
| Température (°C) | 20 | | |
| Dépression kPa (mm Hg) | 13,33 (100) | | |

| Résultats | durée (minutes) | débit d'huile filtrée | |
|---|---|---|---|
| | | (g) | (kg/m2) |
| | 60 | 6470 | 24,0 |
| | 120 | 10400 | 38,5 |
| Tête de filtration | 2 minutes 667 grammes d'huile | | |

On voit ainsi que plus la quantité de Celite augmente plus le débit d'huile filtrée augmente. Par ailleurs, l'essai numéro 1 a été réalisé en prenant une tête de filtration d'un volume trop faible, ainsi l'huile obtenue ne présentait pas, d'une part, la limpidité requise, et, d'autre part, l'émulsion générée après mise en contact de cette huile avec un givre chargé en arômes décantait mal alors que pour les essais 2, 3, 4, la décantation était tout à fait satisfaisante.

### Exemple 4

Pour bien montrer que le procédé selon l'invention se traduit par l'élimination de composés chimiques et non par une simple transformation physique, le gateau de filtration récupéré sur les surface de filtration a été réintroduit dans l'huile filtrée. Il est ainsi apparu clairement qu'une huile filtrée telle qu'obtenue à l'exemple 1 engendrait avec le givre une émulsion qui décantait très facilement alors que la décantation devenait de plus en plus difficile au fur et à mesure que le volume de gateau de filtration réintroduit dans l'huile augmentait.

### Exemple 5

Des tests ont été réalisés pour étudier divers traitements de l'huile tels que:
- la filtration de l'huile à haute température (jusqu'à 80° C),
- la préfiltration à 60-80°C suivie de la filtration à 20°C,
- le rechauffage de l'huile à 80°C suivi d'un refroidissement lent à 20°C avant filtration à 20°C,
- le dégommage à l'acide ou à la vapeur de l'huile, suivi d'une filtration à 20°C.

Tous ces essais ont entraînés une augmentation de la vitesse de filtration, malheureusement, dans chaque cas, l'huile produite générait une émulsion plus stable que l'huile n'ayant pas subi ces traitements. Par émulsion plus stable, on entend une émulsion qui décante moins vite, ou pas du tout, ou qui engendre après décantation une interface ou subsistent des résidus d'émulsions.

Plus particulièrement, il est apparu nettement qu'en augmentant la température de l'huile lors de la filtration, il est obtenu une vitesse de filtration plus élevée mais que de façon concomittante la stabilité de l'émulsion produite avec cette huile est elle aussi plus importante. Il convient donc, pour satisfaire aux exigences de décantation de l'émulsion produite, de filtrer l'huile à une température inférieure à 30°C.

Par ailleurs, il est apparu qu'une filtration à 20°C suivi d'un dégommage, à l'acide ou à la vapeur, n'avait en revanche aucun effet pénalisant sur la décantation.

Il semble donc que tout traitement de l'huile préalable à la filtration est pénalisant relativement à la décantation.

## Revendications

1. Procédé de traitement d'une huile de café, dans lequel on filtre l'huile à une température comprise entre 15°C et moins de 30°C, l'huile passant à travers une surface de filtration sur laquelle elle forme une précouche suffisante pour permettre l'obtention d'une huile limpide, on met en contact ladite huile limpide avec soit un givre constitué de dioxyde de carbone, d'eau et d'arômes de café, soit avec la phase aqueuse résiduelle chargée en arômes obtenue après la sublimation du dioxyde de carbone présent dans le givre, pour obtenir une émulsion d'huile et d'eau, et l'on sépare l'huile de l'eau de ladite émulsion par décantation.

2. Procédé selon la revendication 1, dans lequel ladite surface de filtration a une porosité comprise entre 15 et 5 microns.

## Claims

1. Process for the treatment of a coffee oil, in which the oil is filtered at a temperature of between 15°C and less than 30°C, the oil passing through a filtration surface on which it forms a preliminary layer sufficient for enabling a clear oil to be obtained, the said clear oil is put into contact either with a frost consisting of carbon dioxide, water and coffee aromas, or with the residual aqueous phase charged with aromas obtained after the sublimation of the carbon dioxide present in the frost, to obtain an emulsion of oil in water, and the oil is separated from the water of the said emulsion by decanting.

2. Process as claimed in claim 1, in which the said filtration surface has a pore size of between 15 and 5 microns.

## Patentansprüche

1. Verfahren zur Behandlung von Kaffeeöl, worin das Öl bei einer Temperatur im Bereich von 15°C bis weniger als 30°C filtriert wird, wobei das Öl durch eine Filtrationsfläche durchtritt, auf welcher es eine Vorschicht ausbildet, die ausreicht, daß ein klares Öl erhalten wird, das genannte klare Öl mit einem aus Kohlendioxid, Wasser und Kaffeearomen gebildeten Schnee oder mit der mit Aromen beladenen, nach der Sublimation des im Schnee vorliegenden Kohlendioxids erhaltenen zurückbleibenden wäßrigen Phase in Kontakt gebracht wird, um eine Emulsion aus Öl und Wasser zu erhalten, und das Öl vom Wasser der genannten Emulsion durch Dekantieren abgetrennt wird.

2. Verfahren nach Anspruch 1, worin die genannte Filtrationsfläche eine Porosität von 15 bis 5 µm aufweist.
